# EUROPEAN PATENT SPECIFICATION

(11) **EP 2 892 251 B1**
(45) Date of publication and mention of the grant of the patent: **13.09.2017**
(21) Application number: 15150209.3
(22) Date of filing: 06.01.2015
(51) Int. Cl.: H04W 4/00

(54) **System and method for machine-to-machine communication**
System und Verfahren zur Maschine-zu-Maschine-Kommunikation
Système et procédé de communications machine-machine

(30) Priority: 06.01.2014 US 201461923831 P
(43) Date of publication of application: 08.07.2015
(73) Proprietor: 2236008 Ontario Inc., Waterloo, ON N2K 0A7 (CA)
(72) Inventor: Cardamore, Daniel, Kanata, Ontario K2K 0B3 (CA); Shaib, Wadih Jean, Kanata, Ontario K2K 0B3 (CA); Kerr, David, Kanata, Ontario K2K 0B3 (CA)
(74) Representative: Fennell, Gareth Charles

(56) References cited:
- EP-A1- 2 437 524
- EP-A1- 2 605 481
- WO-A1-2009/149759
- US-A1- 2013 290 305

## Description

### BACKGROUND

### 1. Cross-Reference to Related Applications

### 2. Technical Field

The present disclosure relates to the field of machine-to-machine communication. In particular, to a system and method for machine-to-machine communication.

### 3. Related Art

Machine-to-machine (a.k.a. M2M) communication includes technologies that enable systems and devices to communicate with other systems and devices. The systems and devices include various types of machines that have both data handling and communications capabilities such as, for example, embedded computing devices (e.g. washing machine, automobile), sensors (e.g. thermostat) and service platforms (e.g. software update server).

The communication between the systems and devices can include, for example, the transmission of various data payloads, event notifications, signals and other forms of data transmission. One application of M2M communication that is attracting growing interest is the collection of sensor data (e.g. utility meter reading) for analysis. The use of large numbers of systems and devices and/or of data transmissions may result in the need to provide "big data" solutions.

As the number and diversity of systems and devices participating in M2M communication grows, numerous challenges arise for the infrastructure providing the M2M communication capability. The challenges may include issues related to scalability, security, interoperability, intermittent connectivity and minimizing device resource requirements. The interoperability issues include heterogeneity of devices, multiple competing standards and a lack of standardization. Intermittent connectivity may affect devices that have periodic or sporadic connectivity due to factors such as power consumption minimization, intermittent operation (e.g. frequently powered off) and loss of network coverage (in particular for wireless devices). Minimization of device resource requirement may involve one or more resources related to computing capacity, memory footprint, power consumption and bandwidth consumption.

EP 2437524 relates to a machine-to-machine service platform.

US 2013/0290305 relates to data filtering in the internet of things.

There is a need for a system and method for machine-to-machine communications that mitigates one or more of the challenges described above.

### SUMMARY

The present invention relates to a method according to claim 1, to a system according to claim 13 and to a computer readable medium according to claim 14.

### BRIEF DESCRIPTION OF DRAWINGS

The system and method for machine-to-machine communication may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of a system for machine-to-machine communication.
Fig. 2 is a schematic representation of an example state object.
Fig. 3 is a schematic representation of an example delegated action in operation.
Fig. 4 is a schematic representation of an example data translation in operation.
Fig. 5 is flow diagram representing a method for machine-to-machine communication.
Fig. 6 is flow diagram representing a method for data translation.
Fig. 7 is a further schematic representation of a system for machine-to-machine communication.

### DETAILED DESCRIPTION

A system and method for machine-to-machine communication that mitigates one or more of the challenges described above is described therein. The system and method provide for data interactions between interconnect nodes so that they can create outcomes cooperatively with responsiveness and flexibility. Each node may transmit data and events of interest to other nodes. The other nodes may receive notification of data and event transmissions. Delegated actions may be created for off-node (e.g. network-based) execution that may act as delegates for corresponding nodes without the need for the nodes to be connected to a network nor for data and event transmissions to be processed directly by the nodes. The system and method may provide for translation of data and events received, from a node, in a first semantic representation to be translated to a second semantic representation that is compatible with one or more other nodes.

In accordance with an aspect of the present disclosure there is provided a method for machine-to-machine communication between a plurality of nodes comprising: associating a delegated action with a trigger event, where the delegated action includes criteria and one or more corresponding action functions; receiving data destined for a target node, amongst the plurality of nodes, where the data is received at a service delivery platform separate from any of the plurality of nodes; triggering the delegated action when the received data matches the trigger event; assessing criteria included in delegated action; and executing a corresponding action function when at least one criterion in the criteria is met, where the action function is executed at the service delivery platform.

In accordance with another aspect of the present disclosure there is provided a system for machine-to-machine communication between a plurality of nodes comprising: a service delivery platform, separate from any of the plurality of nodes, adapted to receiving and sending data to and from any of the plurality of nodes having: an action repository adapted to storing and retrieving one or more delegated actions, where each delegated action is associated with a trigger event, and where each delegated action includes criteria and one or more corresponding action functions; a administrative repository adapted to storing and retrieving additional data; an action engine adapted to executing a delegated action, including executing an action function when at least one criterion in the criteria of the delegated action is met; and an data repository storing and retrieving the received data; where the service delivery platform , responsive to receiving data matching a trigger event, triggers execution of the delegated action associated with the trigger event.

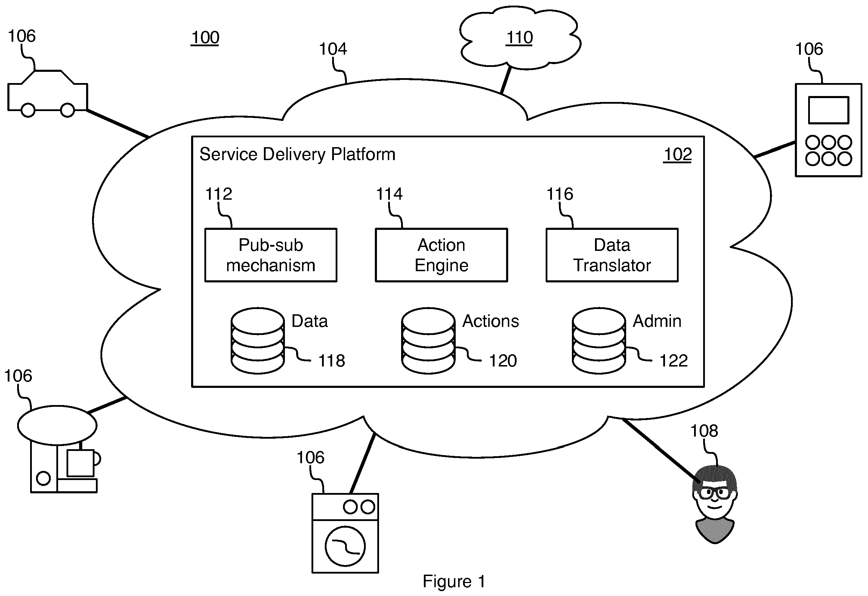

Figure 1 is a schematic representation of a system for machine-to-machine communications. The example system 100 may include a service delivery platform 102. The service delivery platform 102 may be implemented using a network accessible server based (a.k.a. cloud-based) architecture. The service delivery platform may include a single server, multiple co-located servers, multiple distributed servers, one or more tenancies on one or more multi-tenant servers, other similar architectures for providing network accessible services, and combinations of these architectures.

The service delivery platform 102 may be located in a network 104 environment such as, for example, a public network (e.g. the Internet, a.k.a. the World Wide Web), a private network (e.g. a corporate intranet), a virtual private network (VPN) or a combination of one or more of these. The service delivery platform 102 provides data communication connectivity between the system 100 and a plurality of nodes 106. Each node 106 may be a whole or a portion of a machine with data communication capability. The machines may include, for example, mobile devices (e.g. smart phone, computing tablets, media players), vehicles (e.g. automobiles, commercial transport vehicles, aircraft, watercraft), domestic appliances/consumer electronics (e.g. washing machines, dishwashers, dryers, refrigerators, stoves, coffee makers, televisions), industrial equipment (e.g. wind turbines, solar panels) and sensor equipped machines (e.g. thermostats, rainfall gauge, wind speed indicator, power meters, smart meters). Each node 106 may include one or more of computing capability, data storage, sensors, state objects, access permissions, authentication mechanism, data encryption mechanism and other similar functions and capabilities. Each node may be assigned a node identifier (node-id) that uniquely identifies the node 106. The node-id may be assigned to a machine at any of: the point of manufacture or distribution, when the machine is associated with a user identifier, when the machine is first connected to the service delivery platform 102 or at other similar time when a unique identifier may be assigned to the node 106. In addition to data communication connectivity with the nodes 106, the service delivery platform 102 may also provide for connectivity with one or more human users 108, other networks 110 and other service delivery platforms (not illustrated).

Connectivity with the one or more users 108 may be achieved when a user 108 is associated with a machine (e.g. a node 106). Each user 108 may have a user identifier (user-id), user profile, user permissions and other associated user data. A machine that does not have a node identifier (node-id) may be assigned a node-id when the machine is associated with a user-id (i.e. with a user 108). For example, a user's user-id may be associated with an automobile that did not previously have an assigned node-id and as a result the automobile is assigned a node-id. A user-id may be associated with multiple machines, for example, multiple automobiles or an automobile and a refrigerator. A particular machine can be associated with different user-ids at different times (e.g. multiple drivers (users) that share an automobile).

The service delivery platform 102, and thereby also the system 100, may include a publish-subscribe mechanism 112, an action engine 114, a data translator 116 and one or more storage repositories including, for example, a data repository 118, a delegated actions repository 120 and an administrative repository 122.

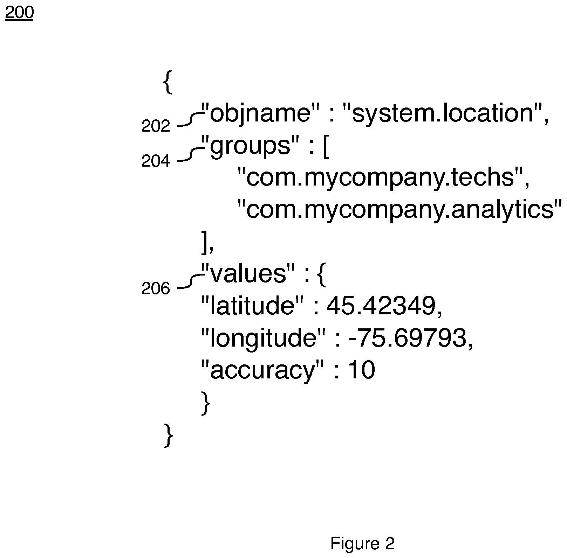

The publish-subscribe mechanism 112 provides for any of the nodes 106 to publish one or more state objects that may be subscribed to by one or more of the nodes 106. A publisher node 106 may publish the creation, updating and deletion of a state object. Each state object may have an associated identifier (e.g. name) and may contain one or more data elements. Fig. 2 is a schematic representation of an example state object. The identifier 202 and contents 206 associated with a newly created or updated state object 200 may be stored in the data repository 118. The data repository 118 may record the current contents of each published state object or alternatively may store a historical series of the contents of each state object (e.g. in a time series). In addition the data repository 118 may store access permission information 204 associated with each state object. When a state object is the subject of a publication event (e.g. creation, update or deletion), each of the nodes 106 that has subscribed to the state objection is notified of the publication event. The publisher node 106 may provide access permission information 204 associated with each state object. Only subscriber nodes 106 with compatible access permissions are permitted to subscribe to, and receive publications notifications for, each state object.

A publishing node 106 may publish its state information in one or more state objects. The one or more state objects may be arranged in a hierarchy such as, for example, a parent object having one or more child objects arranged in a tree-like structure. A node 106 may only be allowed to update state objects that are associated with the node 106 itself (e.g. that it has created or published).

The action engine 114 may execute delegated actions stored in the delegated actions repository 120. Each delegated action is associated with one or a group of nodes 106 such as, for example, nodes 106 that are subscribed to a particular state object. When a publication event occurs for the particular state object, alternatively or in addition to providing notification to the subscribed nodes 106, notification may also be provided to the action engine 114 thereby providing for the nodes 106 to delegate to the action engine 114 in combination with the delegated actions monitoring of publication events on behalf of the nodes 106.

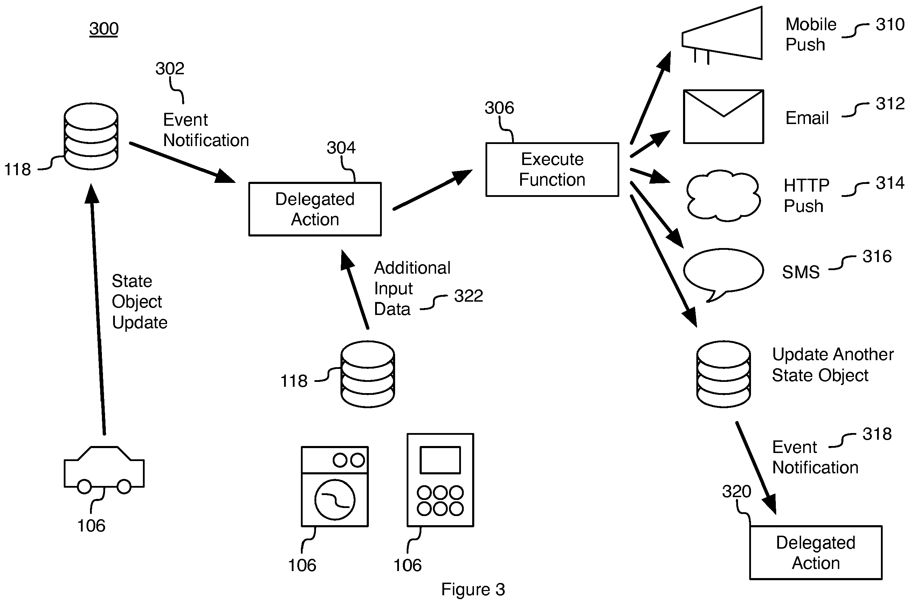

Fig. 3 is a schematic representation of an example delegated action in operation. Each delegated action includes trigger criteria including one or more criterion and one or more respective action functions (a.k.a. as a condition and action or a predicate and function pair). When any of the trigger criterion of the delegated action is met, the action engine 114 causes the respective action function to be invoked. For example, when a publication event notification 302 is received by the action engine 114, the trigger criteria of the associated delegated action 304 is assessed and if a trigger criterion is met, the corresponding action function is invoked 306. Additional input data may be collected 322 that may be used in assessing the trigger criteria and in executing one or more action functions. The collected additional input data may include, for example, a location of any of a node associated with the trigger event, a node that is the target of a notification, a node that is associated with a user-id and other similar additional data including sensor data not limited to location information. Trigger criteria may include, for example, when a state object exists, when a data element in a state object has a particular value or does not have a particular value, when a data element in a state object exceeds or fails to exceed a threshold, when a state object is deleted and other similar trigger criteria.

The action function may include, for example, calculating or determining a data value and updating a data element in a state object accordingly (e.g. generating a publish event), creating and sending a notification to one or more nodes 310 or to another service platform 314, and sending a message (e.g. SMS (short message service) 316, email 312). In addition, the action function may generate an event 318 that triggers one or more other delegated actions 320 thereby creating a flow-based program that chains together a sequence of events.

Delegated actions may be created, updated and deleted by any of nodes 106, users 108 and others (e.g. the manufactures and distributors of machines) that have adequate permissions to do so. For example, machines may contain (e.g. stored in memory) one or more delegated actions when they are manufactured or distributed. A machine in the role of a node 106 may provide the contained delegated actions to the service delivery platform 102 when, for example, it is first, or subsequently, connected to the service delivery platform 102. Having the one or more delegated actions contained in the machine allows a version of a delegated action to be controlled to ensure interoperability with the machine. When a delegated action is executed it has the same permissions as the creator of the delegated action. The delegated action can do anything that the creator can do and thereby act as a delegate for the creator. A delegated action created by a user 108 may execute with the permissions associated with the corresponding user-id. A delegated action created by a node 106 executes with the permissions associated with the corresponding node-id. Delegated actions may be stored in and retrieved from the actions repository 120.

Each delegated action may be triggered for execution even when the associated node 106 is not connected to (e.g. not in data communications with) the service delivery platform 102. This may occur when, for example, the node has intermittent connectivity such as periodic or sporadic connectivity (due to factors such as power consumption minimization or bandwidth consumption minimization), intermittent operation (e.g. frequently powered off) and loss of network coverage (e.g. wireless devices). The service delivery platform 102 may provide a store-and-forward mechanism where notification, messages and other communications destined for a disconnected node 106 are stored and subsequently forwarded to the node 106 when it has reestablished connectivity to the service delivery platform 102. Alternatively, or in addition, the delegated action, when it's trigger criteria is met, may send an SMS, Mobile Push or other similar message to the associated node 106. The sent message provides notification to the node 106 that may then establish, or reestablish, a connection to the service delivery platform 102 in order to retrieve data or receive further communications.

A node 106 may have an associated delegated action that may be triggered for execution even when the node is connected to the service delivery platform 102. This may occur when it is desirable or necessary to minimize resource requirements placed on the node 106 that may include one or more resources related to computing capacity, memory footprint, power consumption and bandwidth consumption.

A delegated action may act as a data filter to mitigate subscribed nodes 106 from being subjected to unnecessary data transfers. For example, a node 106 may need to receive notifications for some events related to a particular state object while not needing to receive notifications for other events related to the particular state object. In a typical publish-subscribe system once a node subscribes to a particular object, the node receives notification for all events related to the particular object. This may result in the node receiving numerous unnecessary notifications that may be overwhelming or undesirable. A delegated action may be used to filter the notifications related to the particular object to ensure that only notifications that meet a filter criteria are ultimately sent to the subscribing node 106.

Delegated actions may be defined using a script, markup or templating language such as, for example, Liquid (http://liquidmarkup.org). The use of Liquid or other similar languages may provide for rendering safe templates that do not affect the security of the server on which they are rendered. Alternatively, or in addition, delegated actions may be defined using other programming mechanisms such as, for example, machine code, assembly language, compiled object code from any procedural language, object-oriented programming, event-driven/dataflow programming and declarative programming.

Example cases for use of delegated actions may include: sending a mobile push notification to the mobile phone of an owner when their automobile is being towed away; filtering and processing state changes on the service delivery platform (a.k.a. in the cloud) so that all of the raw data does not need to transmitted over a costly data connection or to a battery powered device for processing; implement server side (e.g. cloud-based) geo-fencing so that, for example, when an automobile comes within a threshold distance of a fueling station a notification is sent to the automobile; and an original equipment manufacturer (OEM) can receive a real-time HTTP Push notification at their servers when an alarm threshold is exceeded on one of their deployed in-market products.

Access to each state object is based on permissions. A set of permissions may be associated with each user-id, node-id and one or more groups. Each node may belong to one of the groups and inherit the set of permissions associated with the group. Each state object may have access characteristics indicating which user-ids, node-ids and groups the state object may be shared with. Only nodes that have compatible permissions or belong to a group that is included in the one or more groups that a state object may be shared with can subscribe to the state object and thereby receive update notifications. Alternatively, or in addition, other permission mechanisms may be used to control access to state objects.

Nodes may communicate amongst themselves using one or more messaging mechanisms such as, for example, direct messaging, publish-subscribe of state objects, broadcasting messaging to a group, real-time notifications for any of the foregoing and file sharing. Aspects of the systems and method for machine-to-machine communication described herein and illustrated using the publication of, and subscribing to, state objects also applies to other forms of data payloads communicated between the nodes 106 using any of the messaging mechanisms.

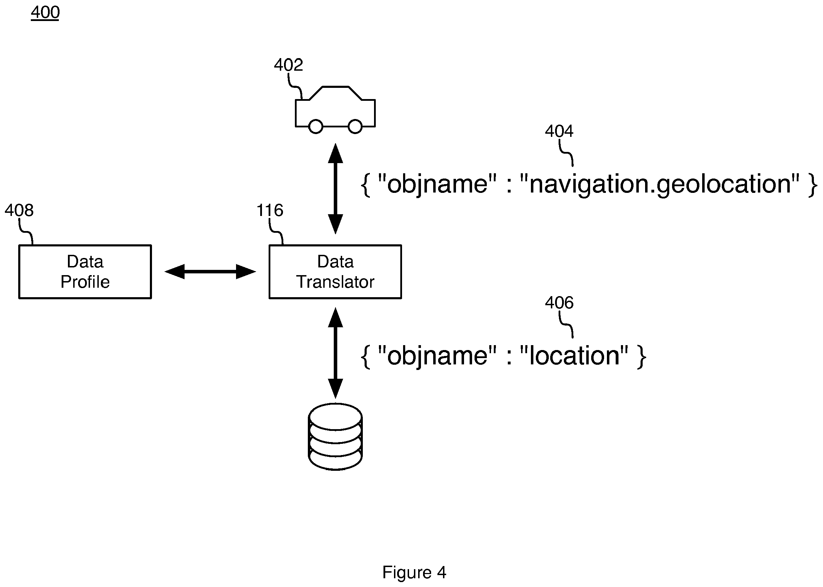

Data contained in the one or more data payloads and state objects may act as an interface between the cooperating interconnected nodes. However, requiring that all of the nodes are the same or use the same data representation is potentially limiting. Each different type of node 106 may use different names to represent the same, or similar, data. For example 'location' - 'navigation. geolocation', or power is 'ON' - power is 'Plugged In'. Figure 4 is a schematic representation of an example data translation in operation. The system and method for machine-to-machine communications may provide translation of updates received, from a first node 402, for a state object in a first semantic representation 404 to be translated to a second semantic representation 406 that is compatible with a second node.

The data translator 116 may translate data contained in a state object on receipt of a publication notification from the corresponding publishing node 106. The translated state object data may be stored and made available to other nodes 106 that have the correct permissions to access the state object. The original state object data may also be stored and made available to the publishing node 106, and other nodes 106 compatible with the same semantic representation as the publishing node 106, thereby mitigating the need to translate the data back into the first semantic representation 404 in order to responds to a query from the publishing node 106 or other nodes 106. Translation of state object data off-node of the nodes 106 (e.g. on the service delivery platform 102) may mitigate issues related to interoperability, resource utilization and scalability of the system.

Translation of state object data may be based on data profiles 408. Translation of data may include one or more of lexical substitution or mapping, denormalization (e.g. including the dividing of a single state object into multiple state objects), filtering of passwords and other confidential content, removal of unsupported commands and other similar semantic translation functions. Data profiles 408 may be defined using a script, markup or templating language such as, for example, Liquid (http://liquidmarkup.org). A data profile 408 may be associated with a particular node 106, version of a node 106 or group to which a node 106 belongs.

State object data and other data payload contents may be represented in machine-readable or human-readable form or in a combination thereof. For example, a state object or other data payload contents may contain any text string including name-value pairs in accordance with JSON (JavaScript Object Notation) as described in Internet Engineering Taskforce (IETF) Request for Comments (RFC) 4627.

Node-ids, user-ids and group-ids together with related profiles, permissions and other related data may be stored in and retrieved from the administration repository 122. Translation templates may be stored in administration repository 122.

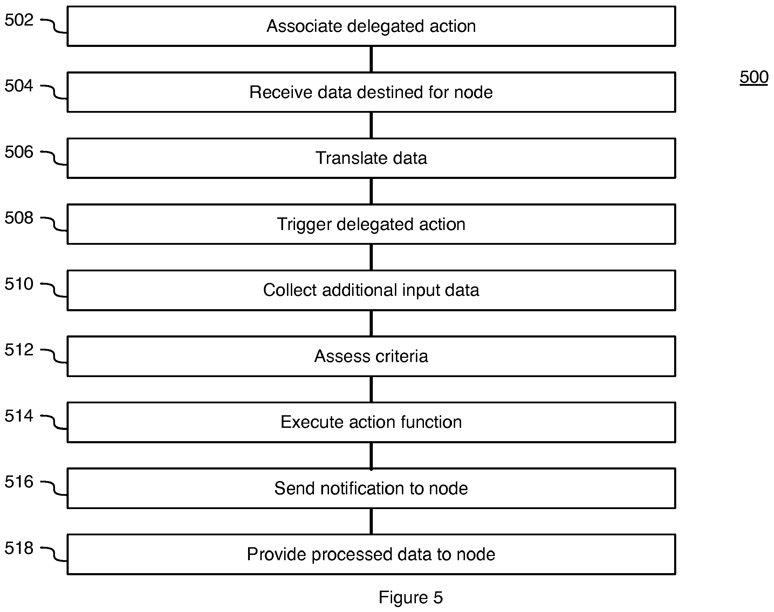

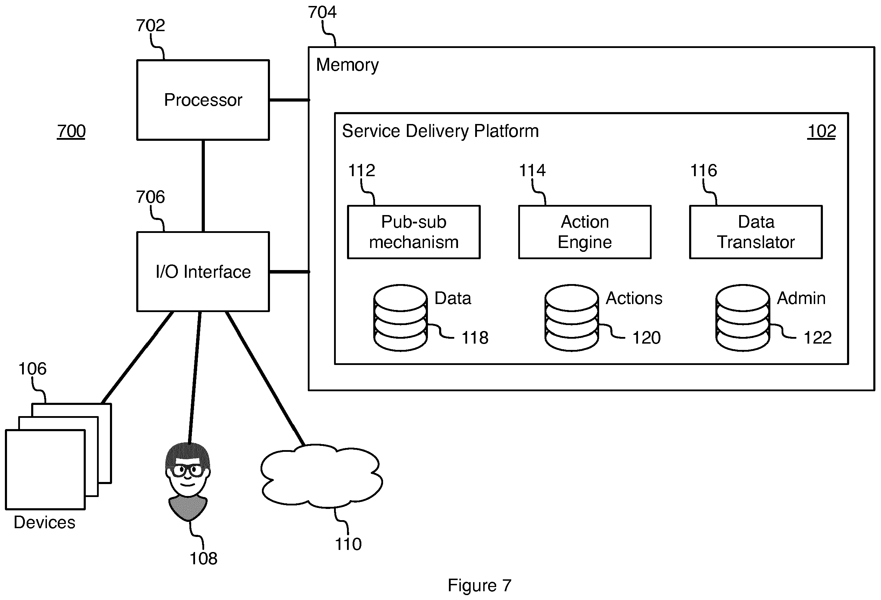

Figure 5 is a representation of a method for machine-to-machine communications. The method 500 may be, for example, implemented using systems 100 or 700 described herein with reference to Figures 1 and 7. The method 500 may include the following acts. Associating a delegated action with a trigger event 502. The delegated action may be associated with a trigger event such as, for example, the receipt of a message or other data payload destined for a particular node 106 or the publication of an update to a particular state object. Receiving data destined for a target node 504. The received data may be, for example, in the form of a direct message, broadcast message to a group, a publication event for a particular state object, a file share or a real-time notification of any of the foregoing. Translating the data 506. The received data may, optionally, be translated from a first semantic representation to a second semantic representation using a translation template associated with a node that originated the data. The received data may also be stored in the second semantic representation and further optionally in the first semantic representation. Triggering the delegated action 508. After the data is received the delegated action associated with a trigger event corresponding to the received data is invoked (e.g. is executed). Triggering the delegated action may include verifying that the delegated action has the correct permissions to access the received data and execute the action functions. Collecting additional input data 510. The delegated action may specify additional data that is to be collected and the additional input data may be collected accordingly. Collecting the additional input data may include verifying that the delegated action has permissions to collect the additional input data. Assessing the delegated action criteria 512. The delegated action criteria are assessed and when any trigger criterion is met a corresponding action function may be invoked as described above with reference to Figure 3. Assessing of the delegated action criteria may include using some or all of the collected additional input data. Executing an action function 514. The action function may include, for example, calculating or determining a data value and updating a data element in a state object accordingly, creating and sending a notification to one or more nodes 310 or to a service platform 314, sending a message or generating another trigger event as described above with reference to Figure 3. Execution of the action function may include using some or all of the collected additional input data. Sending a notification to the target node 516. The action function may optional send a notification to the target node 106 as described above with reference to Figure 3. Providing processed data to the target node 518. The processed data may be provided to the target node 106 in the any of the first semantic representation, the second semantic representation or a third semantic representation using a translation template associated with the target node 106. The processed data may be provided using either of a push mechanism (e.g. direct or broadcast message sent to the target node) or a pull mechanism (e.g. a response to a read request from the target node) or a combination of pull and push mechanisms.

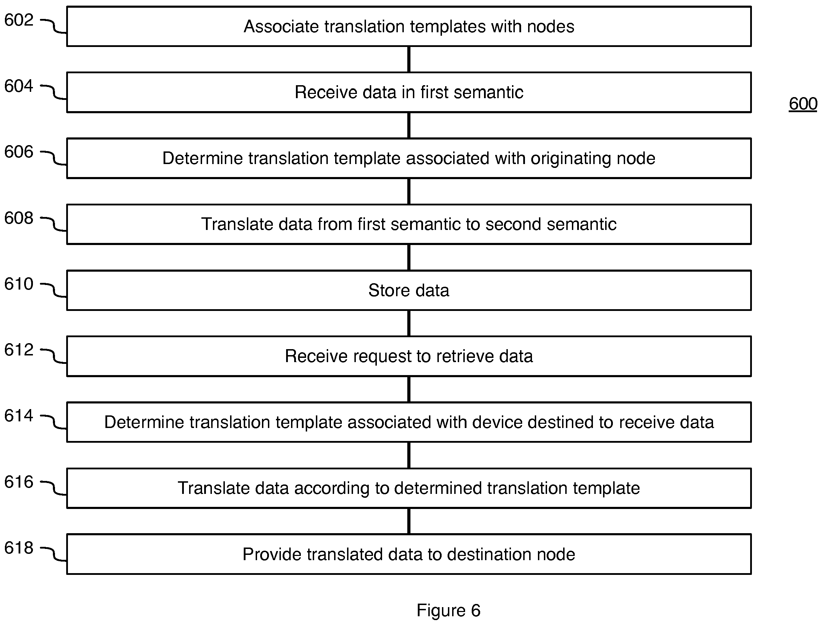

Figure 6 is a representation of a method for data translation. The method 600 may be, for example, implemented using the systems 100 or 700 described herein with reference to Figures 1 and 7. The all or part of method 600 may correspond to all or part of acts 506 and 518 described above with reference to Figure 5. The method 600 may include the following acts. Associating a translation template with each of one or more node 602. The translation template may be associated with a particular node 106 or may be associated with more than one node 106 based on, for example, a node type, category, classification or other grouping. Receiving data in a first semantic 604. Determining a translation template associated with an originating node from which the data originated 606. Translating the received data from the first semantic to a second semantic 608. Translating of the received data may use the determined translation template. When the determined translation template indicates that the first semantic representation is the same as the second semantic representation, it may not be necessary to perform a translation as the data may already exist in the desired representation. Storing the data in the second semantic 610. Optionally, the data may also be stored in the first semantic as received. Receiving a request to retrieve the data 612. The request to retrieve the data may be internal to the system 100 or originate external to the system 100 (e.g. from a node 106). Determining a translation template associated with a node destined to receive the data 614. Translating the stored data according to the determined 614 translation template 616. When the determined translation template corresponds to one of the first and second semantic representations, it may not be necessary to perform a further translation as the data may already exist in the desired representation. Providing the translated data to the destination node 618.

Figure 7 is a schematic representation of a system for machine-to-machine communications. The system 700 comprises a processor 702, memory 704 (the contents of which are accessible by the processor 702) and an I/O interface 706. The memory 704 may store instructions which when executed using the processor 702 may cause the system 700 to render the functionality associated with the service delivery platform 102 and its components as described herein. In addition the memory 704 may store data, state objects, delegated actions, translation templates, administrative date, metadata and other similar information.

The processor 702 may comprise a single processor or multiple processors that may be disposed on a single chip, on multiple devices or distributed over more that one system. The processor 702 may include hardware that executes computer executable instructions or computer code embodied in the memory 704 or in other memory to perform one or more features of the system. The processor 702 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 704 may comprise a device for storing and retrieving data, processor executable instructions, or any combination thereof. The memory 704 may include nonvolatile and/or volatile memory, such as a random access memory (RAM), a read-only memory (ROM), an erasable programmable read-only memory (EPROM), or a flash memory. The memory 704 may comprise a single device or multiple devices that may be disposed on one or more dedicated memory devices or on a processor or other similar device. Alternatively or in addition, the memory 704 may include an optical, magnetic (e.g. hard-drive) or any other form of data storage device.

The memory 704 may store computer code, such as, for example, computer code to render the functions of service delivery platform 102, the publish-subscribe mechanism 112, the action engine 114, and the data translator 116 as described herein. The computer code may include instructions executable with the processor 702. The computer code may be written in any computer language, such as C, C++, assembly language, channel program code, script, markup or templating languages and/or any combination of computer languages. The memory 704 may store information in data structures including, for example, received data, state objects, delegated actions, translation templates, administrative date, metadata and other similar information.

The I/O interface 706 may be used to connect nodes such as, for example, devices 106, users 108 and networks 110, and to other components of the system 700.

In addition to the embodiments described above, further embodiments of the system and method of this disclosure may include, but are not limited to, the following.

All of the disclosure, regardless of the particular implementation described, is exemplary in nature, rather than limiting. The systems 100 and 700 may include more, fewer, or different components than illustrated in Figures 1 and 7. Furthermore, each one of the components of systems 100 and 700 may include more, fewer, or different elements than is illustrated in Figures 1 and 7. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code
and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for machine-to-machine communications have been described, it will be apparent to those of ordinary skill in the art that many more embodiments and implementations are possible within the scope of the present invention. Accordingly, the invention is not to be restricted except in light of the attached claims.

## Claims

1. A method for machine-to-machine communication between a plurality of nodes comprising:
associating a delegated action (304) with a trigger event in a state object, where the delegated action includes criteria and one or more corresponding action functions to be executed on behalf of a target node provided by the node to a service delivery platform separate from any of the plurality of nodes (106);
receiving data destined for the target node associated with the state object, amongst the plurality of nodes (106), where the data is received at the service delivery platform (102);
triggering the delegated action when the received data matches the trigger event defined in the state object;
assessing criteria included in the delegated action defining if a corresponding action function should be executed by the service delivery platform; and
executing the corresponding action function in response to the received data when at least one criterion in the criteria is met, where the action function is executed at the service delivery platform (102) on behalf of the target node, thereby acting as a delegate for the node.

2. The method for machine-to-machine communication of claim 1, where the received data is a publication event associated with a state object, where the target node is a subscriber to the state object and where the trigger event is a publication event.

3. The method for machine-to-machine communication of claim 1, where the delegated action (304) was obtained from the target node and wherein the corresponding action function is executed at the service delivery platform on behalf of the target node.

4. The method for machine-to-machine communication of claim 3, where the target node is not in data communications with the service delivery platform (102) when executing the corresponding action function (306) at the service delivery platform.

5. The method for machine-to-machine communication of claim 1, further comprising translating the received data from a first semantic representation (404) to a second semantic representation (406) based on a translation template (408) associated with an originating node from which the data was received.

6. The method for machine-to-machine communication of claim 1, further comprising collecting additional data (322) at the service delivery platform responsive to triggering the delegated action and where the collected additional data (322) is used in any of the acts of assessing criteria included in the delegated action and executing a corresponding action function.

7. The method for machine-to-machine communication of claim 1, further comprising sending a notification to the target node (310) from the service delivery platform responsive to executing the corresponding action function.

8. The method for machine-to-machine communication of claim 7, further comprising providing from the service delivery node processed data to the target node, where the processed data is derived from the received data by any of the acts of executing the action function (306) and translating the data (116).

9. The method for machine-to-machine communication of any one of claims 1 to 8 wherein the target node is identified with a node identifier (node-id), where the node-id is associated with any of a machine, and a machine in combination with an associated user identifier (user-id).

10. The method for machine-to-machine communication of claim 9 wherein the machine comprising the target node is associated with different user-ids at different times and thereby have different node-ids associated with the target node based upon the user-id associated with the machine at a particular time.

11. The method for machine-to-machine communication of any one of claims 1 to 10 wherein the delegated action is associated with the trigger event by any of the target node (106), another node (106), a user (108) and a 3^{rd} party.

12. The method for machine-to-machine communication of any one of claims 1 to 11 wherein any of the criteria and one or more corresponding action functions included in the delegated action (304) and the trigger event associated with the delegated action are derived from one or more operational characteristics associated with the target node (106).

13. A system for machine-to-machine communication between a plurality of nodes comprising:
one or more processors (702); and
a memory (704) storing instructions that, when executed by the one or more processors, configures the system to enact any of the methods of claims 1 to 12.

14. A computer readable medium comprising instructions for implementing the method of any of claims 1 to 12.

## Patentansprüche

1. Verfahren zur Maschine-zu-Maschine-Kommunikation zwischen mehreren Knoten, umfassend:
Assoziieren einer delegierten Handlung (304) mit einem auslösenden Ereignis in einem Statusobjekt, wobei die delegierte Handlung Kriterien und eine oder mehrere entsprechende Handlungsfunktionen umfasst, die im Auftrag eines Zielknotens durchzuführen sind, der von dem Knoten an eine Service Delivery Platform getrennt von beliebigen der mehreren Knoten (106) bereitgestellt wird;
Empfangen von Daten, die für den Zielknoten bestimmt sind, der mit dem Statusobjekt assoziiert ist, aus den mehreren Knoten (106), wobei die Daten an der Service Delivery Platform (102) empfangen werden;
Auslösen der delegierten Handlung, wenn die empfangenen Daten mit dem auslösenden Ereignis übereinstimmen, das im Statusobjekt definiert ist;
Bewerten von in die delegierten Handlung einbezogen Kriterien, die bestimmen ob eine entsprechende Handlungsfunktion von der Service Delivery Platform ausgeführt werden soll; und
Ausführen der entsprechenden Handlungsfunktion als Reaktion auf die empfangenen Daten, wenn mindestens ein Kriterium aus den Kriterien erfüllt ist, wobei die Handlungsfunktion an der Service Delivery Platform (102) im Auftrag des Zielknoten ausgeführt wird und somit als ein Delegierter für den Knoten agiert.

2. Verfahren zur Maschine-zu-Maschine-Kommunikation nach Anspruch 1, wobei die empfangenen Daten ein mit einem Statusobjekt assoziiertes Veröffentlichungsereignis sind, wobei der Zielknoten ein Subskribent für das Statusobjekt ist, und wobei das auslösende Ereignis ein Veröffentlichungsereignis ist.

3. Verfahren zur Maschine-zu-Maschine-Kommunikation nach Anspruch 1, wobei die delegierte Handlung (304) aus dem Zielknoten erhalten wurde, und wobei die entsprechende Handlungsfunktion an der Service Delivery Platform im Auftrag des Zielknotens ausgeführt wird.

4. Verfahren zur Maschine-zu-Maschine-Kommunikation nach Anspruch 3, wobei der Zielknoten nicht in Datenkommunikation mit der Service Delivery Platform (102) steht, wenn die entsprechende Handlungsfunktion (306) an der Service Delivery Platform ausgeführt wird.

5. Verfahren zur Maschine-zu-Maschine-Kommunikation nach Anspruch 1, das ferner das Übersetzen der empfangenen Daten von einer ersten semantischen Darstellung (404) in eine zweite semantische Darstellung (406) auf Grundlage einer Übersetzungsvorlage (408) umfasst, die mit einem Ausgangsknoten assoziiert ist, von dem die Daten empfangen wurden.

6. Verfahren zur Maschine-zu-Maschine-Kommunikation nach Anspruch 1, das ferner das Sammeln zusätzlicher Daten (322) an der Service Delivery Platform umfasst, auf das Auslösen der delegierten Handlung reagierend, und wobei die gesammelten zusätzlichen Daten (322) für beliebige der Handlungen des Bewertens von Kriterien, die in der delegierten Handlung enthalten sind, und Ausführen einer entsprechenden Handlungsfunktion verwendet werden.

7. Verfahren zur Maschine-zu-Maschine-Kommunikation nach Anspruch 1, das ferner das Senden einer Benachrichtigung an den Zielknoten (310) von der Service Delivery Platform umfasst, reagierend auf das Ausführen der entsprechenden Handlungsfunktion.

8. Verfahren zur Maschine-zu-Maschine-Kommunikation nach Anspruch 7, das ferner das Bereitstellen von verarbeiteten Daten von dem Service Delivery Knoten, an den Zielknoten umfasst, wobei die verarbeiteten Daten aus den Daten abgeleitet sind, die von beliebigen der Handlungen des Ausführens der Handlungsfunktion (306) und Übersetzen der Daten (116) empfangenen werden.

9. Verfahren zur Maschine-zu-Maschine-Kommunikation nach einem der Ansprüche 1 bis 8, wobei der Zielknoten durch eine Knotenkennung (Knoten-ID) gekennzeichnet ist, wobei die Knoten-ID mit einem aus einer Maschine und einer Maschine in Kombination mit einer assoziierten Benutzerkennung (Benutzer-ID) assoziiert ist.

10. Verfahren zur Maschine-zu-Maschine-Kommunikation nach Anspruch 9, wobei die Maschine, die den Zielknoten umfasst, zu verschiedenen Zeitpunkten mit verschiedenen Benutzer-IDs assoziiert ist, und somit aufgrund der Benutzer-ID, die mit der Maschine zu einem bestimmten Zeitpunkt assoziiert ist, verschiedenen Knoten-IDs mit dem Zielknoten assoziiert sind.

11. Verfahren zur Maschine-zu-Maschine-Kommunikation nach einem der Ansprüche 1 bis 10, wobei die delegierte Handlung mit dem auslösenden Ereignis durch einen aus dem Zielknoten (106), einem anderen Knoten (106), einem Benutzer (108) und einem Dritten assoziiert ist.

12. Verfahren zur Maschine-zu-Maschine-Kommunikation nach einem der Ansprüche 1 bis 11, wobei eines aus dem Kriterium und einer oder mehreren entsprechenden Handlungsfunktionen, die in der delegierte Handlung (304) enthalten sind, und das auslösende Ereignis, das mit der delegierten Handlung assoziiert ist, von einem oder mehreren Betriebsmerkmalen abgeleitet werden, die mit dem Zielknoten (106) assoziiert sind.

13. System zur Maschine-zu-Maschine-Kommunikation zwischen mehreren Knoten, umfassend:
einen oder mehrere Prozessoren (702); und
einen Speicher (704), der Anweisungen speichert, die das System zum Durchführen beliebiger Verfahren aus den Ansprüchen 1 bis 12 konfiguriert, wenn er von dem einem oder mehreren Prozessoren ausgeführt wird.

14. Computerlesbares Medium, das Anweisungen zum Implementieren des Verfahrens nach einem der Ansprüche 1 bis 12 umfasst.

## Revendications

1. Procédé de communication de machine à machine entre une pluralité de noeuds, comprenant les étapes consistant à :
associer une action déléguée (304) à un événement déclencheur dans un objet à états finis, où l'action déléguée comprend des critères et une ou plusieurs fonctions d'action correspondantes à exécuter au nom d'un noeud cible fourni par le noeud à une plate-forme de fourniture de services distincte de tous les noeuds au sein de la pluralité de noeuds (106) ;
recevoir des données destinées au noeud cible associé à l'objet à états finis, parmi la pluralité de noeuds (106), les données étant reçues sur la plate-forme de fourniture de services (102) ;
déclencher l'action déléguée lorsque les données reçues correspondent à l'événement déclencheur dans l'objet à états finis ;
analyser des critères contenus dans l'action déléguée pour définir si une fonction d'action correspondante doit être exécutée par la plate-forme de fourniture de services ; et
exécuter la fonction d'action correspondante en réponse aux données reçues lorsqu'est satisfait au moins un critère parmi les critères, où la fonction d'action est exécutée sur la plate-forme de fourniture de services (102) au nom du noeud cible, en agissant de la sorte comme un délégué du noeud.

2. Procédé de communication de machine à machine selon la revendication 1, où les données reçues sont un événement de publication associé à un objet à états finis, où le noeud cible est un abonné à l'objet à états finis et où l'événement déclencheur est un événement de publication.

3. Procédé de communication de machine à machine selon la revendication 1, où l'action déléguée (304) a été obtenue du noeud cible et dans lequel la fonction d'action correspondante est exécutée sur la plate-forme de fourniture de services au nom du noeud cible.

4. Procédé de communication de machine à machine selon la revendication 3, où le noeud cible n'a pas de communication de données avec la plate-forme de fourniture de services (102) lorsque la fonction d'action correspondante (306) est exécutée sur la plate-forme de fourniture de services.

5. Procédé de communication de machine à machine selon la revendication 1, comprenant en outre l'étape consistant à traduire les données reçues entre une première représentation sémantique (404) et une seconde représentation sémantique (406), en fonction d'un modèle de traduction (408) associé à un noeud d'origine en provenance duquel les données ont été reçues.

6. Procédé de communication de machine à machine selon la revendication 1, comprenant en outre l'étape consistant à collecter des données supplémentaires (322) sur la plate-forme de fourniture de services en réponse au déclenchement de l'action déléguée, où les données supplémentaires collectées (322) sont utilisées dans l'une quelconque des étapes consistant à analyser des critères inclus dans l'action déléguée et à exécuter une fonction d'action correspondante.

7. Procédé de communication de machine à machine selon la revendication 1, comprenant en outre l'étape consistant à envoyer une notification au noeud cible (310) par la plate-forme de fourniture de services en réponse à l'exécution de la fonction d'action correspondante.

8. Procédé de communication de machine à machine selon la revendication 7, comprenant en outre l'étape consistant à fournir des données traitées par le noeud de fourniture de services au noeud cible, où les données traitées sont dérivées des données reçues par l'une quelconque des étapes consistant à exécuter la fonction d'action (306) et à traduire les données (116).

9. Procédé de communication de machine à machine selon l'une quelconque des revendications 1 à 8, dans lequel le noeud cible est identifié par un identificateur de noeud, l'identificateur de noeud étant associé soit à une machine, soit à une machine en combinaison avec un identificateur d'utilisateur associé.

10. Procédé de communication de machine à machine selon la revendication 9, dans lequel la machine constituant le noeud cible est associée à des identificateurs d'utilisateur différents à des instants différents, si bien que des identificateurs de noeud différents sont associés au noeud cible en fonction de l'identificateur d'utilisateur qui est associé à la machine à un instant particulier.

11. Procédé de communication de machine à machine selon l'une quelconque des revendications 1 à 10, dans lequel l'action déléguée est associée à l'événement déclencheur par soit le noeud cible (106), soit un autre noeud (106), soit un utilisateur (108), soit une tierce partie.

12. Procédé de communication de machine à machine selon l'une quelconque des revendications 1 à 11, dans lequel l'un quelconque des critères et une ou plusieurs fonctions d'action correspondantes incluses dans l'action déléguée (304) et l'événement déclencheur associé à l'action déléguée sont dérivés d'une ou plusieurs caractéristiques de fonctionnement associées au noeud cible (106).

13. Système de communication de machine à machine entre une pluralité de noeuds, comprenant :
un ou plusieurs processeurs (702) ; et
une mémoire (704) contenant des instructions qui, lorsqu'elles sont exécutées par lesdits un ou plusieurs processeurs, configurent le système afin de mettre en oeuvre l'un quelconque des procédés selon les revendications 1 à 12.

14. Support lisible par ordinateur comprenant des instructions destinées à mettre en oeuvre le procédé selon l'une quelconque des revendications 1 à 12.
